# EUROPÄISCHE PATENTSCHRIFT

(11) **EP 2 979 030 B1**
(45) Veröffentlichungstag und Bekanntmachung des Hinweises auf die Patenterteilung: **19.07.2017**
(21) Anmeldenummer: 14714662.5
(22) Anmeldetag: 27.03.2014
(51) Int. Cl.: B05B 1/00, B23K 7/00, F23D 14/42, F23D 14/54

(54) **DÜSE ZUM SCHNEIDEN VON STAHLWERKSTÜCKEN**
NOZZLE FOR CUTTING STEEL MATERIALS
BUSE DE COUPE DE MATÉRIAUX D'ACIER

(30) Priorität: 27.03.2013 DE 102013103128; 21.06.2013 DE 102013106511
(43) Veröffentlichungstag der Anmeldung: 03.02.2016
(73) Patentinhaber: Gefam GmbH, 61462 Königstein im Taunus (DE)
(72) Erfinder: LOTZ, Horst Karl, 61462 Königstein im Taunus (DE)
(74) Vertreter: Dennemeyer & Associates S.A.
(86) Internationale Anmeldenummer: PCT/EP2014/056187
(87) Internationale Veröffentlichungsnummer: WO 2014/154819

(56) Entgegenhaltungen:
- WO-A1-2011/103923
- WO-A1-2012/130290
- US-A- 5 002 261

## Beschreibung

### Gebiet der Erfindung

Die Erfindung betrifft eine Düse zum Schneiden von Stahlwerkstücken und Werkstücken aus Eisenlegierungen.

Sauerstoffgas-Schneidbrenner sind zum Schneiden von Stahlwerkstücken und Werkstücken aus Eisenlegierungen vorgesehen. Damit werden beispielsweise Blöcke und Brammen geschnitten. Dabei wird die aus einem Strahl von Sauerstoff und z. B. Propangas als Heizgas entzündete Flamme des Schneidgasbrenners auf die Oberfläche des zu schneidenden Metalls gelenkt. Das Metall wird dabei durch das Heizgas und den Heizsauerstoff auf dessen Zündtemperatur von 1.500°C erhitzt, woraufhin der Schneidsauerstoff zugeschaltet wird und das erhitzte Metall oxidiert, um den Schnitt zu bewirken. Dabei fängt das Werkstück an zu brennen und bildet eine Fuge, die sich zu einem Schnitt verlängert, wenn der Strahl weiterläuft.

Da dabei noch Wärme entsteht, wird dieses Schneidbrennen als autogen bezeichnet, d. h. es erfolgt eine weitere Vorheizung der nächsten Stahlschichten der zu schneidenden Stelle aus der Temperatur, die aus dem verbrennenden Stahl gewonnen wird.

Das Dokument US 5,002,261 offenbart eine Düse gemäß dem Oberbegriff des Anspruchs 1.

### Aufgabe

Aufgabe der Erfindung ist es, eine Düse zu schaffen, die einen höheren Wirkungsgrad beim Schneidbrennen von Werkstücken aus Stahl und Eisenlegierungen erzielt.

### Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht.

Die vorgeschlagene Düse zum Schneiden von Stahlwerkstücken und Werkstücken aus Eisenlegierungen weist einen Düsenkörper auf. Der Düsenkörper hat vorzugsweise zwei Schneidsauerstoffbohrungen, die von einer Eintrittsseite für die Gase hin zu einer Austrittsseite des Düsenkörpers für die Gase zur Bildung eines Schneidstrahls verlaufen. Es können aber auch drei oder mehr sein. Der Düsenkörper hat einen Freiraum, der von der Austrittsseite begrenzt wird und in den die Schneidsauerstoffbohrungen münden. In diesem Freiraum bildet sich die Flamme, die jedoch weit über diesen Freiraum hinaus reicht, um das Werkstück schneiden zu können. Eine Mehrzahl von Heizsauerstoffbohrungen und Heizgasbohrungen sind in konzentrischen Kreisen um die zwei Schneidsauerstoffbohrungen angeordnet.

Die Düse wird typischerweise von einer Haltemutter (z. B. einem Sechskant) umgeben zum Verschrauben der Düse an einem Schneidbrenner. Mit Hilfe dieses Sechskants wird die Düse gegen eine Flachdichtung in den Gaszuführungen formschlüssig gepresst. Die Andruckkraft muss dabei so hoch sein, dass die Drücke von 4-6 bar für das Heizgas und den Heizsauerstoff sowie von typischerweise 10 bar für den Schneidsauerstoff bewältigt werden können.

Der Düsenkörper bzw. der Schneidbrenner, in den der Düsenkörper eingeschraubt wird, ist im Einsatz so auszurichten, dass die beiden Schneidsauerstoffbohrungen und damit die beiden Schneidstrahlen in Schneidrichtung hintereinander angeordnet sind.

Der Schneidvorgang wirkt am stärksten und am frühsten nahe der Schneiddüse. Wandert diese mit ihrer Schneidgeschwindigkeit von typischerweise mehreren 100 mm/Min durch zum Beispiel eine Bramme, so hat der Schnittverlauf in der Bramme einen hinter der Schneiddüse zurückbleibenden bogenförmigen Nachlauf, den sogenannten Riefennachlauf. In diesem Riefennachlauf wird der durch die zweite Schneidsauerstoffbohrung erzeugte zweite Schneidstrahl wirksam. Der zweite Schneidstrahl bläst Schlacke, die sich während des Schneidvorganges bildet und in den Riefennachlauf abfließt, effektiv aus. Dadurch bleibt unter anderem auch weniger Schlacke an der Bramme hängen.

Außerdem verstärkt der zweite Schneidstrahl die Schneidwirkung. Dadurch vertieft sich der Riefennachlauf. Effektiv wird damit die Schneidwirkung erhöht. Dies erlaubt es, die Schneidgeschwindigkeit bis zur doppelten Schneidgeschwindigkeit verglichen mit Schneiddüsen mit nur einem Schneidsauerstoff-Kanal zu erhöhen.

Die erhöhte Schneidgeschwindigkeit hat einen geringeren Verbrauch an Heizgas und Heizsauerstoff zur Folge.

Außerdem dämpfen sowohl der Flammenring aus Heizgas und Heizsauerstoff als auch der zweite Schneidstrahl den an der autogen brennenden Schneidkante entstehenden Lärm. Dadurch ergibt sich eine erhebliche Lärmreduktion.

Vorteilhafterweise ist der Freiraum topfartig konkav ausgebildet, damit sich die Schneidflamme zunächst ungestört ausbilden kann.

Wenn der topfartige Freiraum und der Sechskant einstückig ausgebildet sind, also eine einstückige Blockdüse bilden, wird verhindert, dass sich während des Einsatzes der Düse im Schneidprozess Schlacke an etwa sich bildenden Verbindungsstellen oder Ritzen ablagert und festbrennt.

Der Boden des topfartigen Freiraums kann kegelförmig konkav ausgebildet werden. Dadurch werden die Strahlen stärker fokussiert. Hierdurch wird eine weitere Einsparung an Heizgas und Schneidsauerstoff erreicht.

Dabei kann der Kegelwinkel 116-118° betragen. In einem solchen Fall kann der Kegel in der Austrittsseite mit einem üblichen Bohrer ausgebildet werden, der typischerweise genau diesen Winkel aufweist.

Ferner kann am austrittsseitigen Ende des Freiraums eine Stufe ausgebildet sein. Von dieser Stufe prallen die expandierenden Gase ab, wodurch sie stärker fokussiert werden.

Durch einen zwischen der Heizsauerstoffbohrung und der Heizgasbohrung ausgebildeten Verbindungskanal lässt sich dem Heizsauerstoff dosiert Heizgas zusetzen. Dadurch werden die für die Verbrennung nötigen Gase besser durchmischt, und die Verbrennung wird effizienter. Dadurch erhöht sich die Temperatur im Schneidstrahl.

Eine erhebliche Lärm-Reduktion kann dadurch erreicht werden, dass in der Wandung des Freiraums eine innenliegende Ringnut ausgebildet wird, deren austrittsseitige Wandung einen Winkel bezogen auf die Mittelachse der Düse von ca. 45° hat, und in die die Heizsauerstoffbohrung mündet. Dies führt dazu, dass die nachfolgenden Kanten des Düsenkörpers vom brennenden Gasgemisch gleichmäßiger umströmt werden.

Wenn nicht nur die mindestens zwei axialen Bohrungen, sondern auch der Freiraum sich zur Austrittsseite hin mit einem Öffnungswinkel von 6,5 bis 7,5° öffnet, kann eine weitere Beschleunigung infolge Druckabfalls des ausströmenden Gases erreicht werden.

Die erfindungsgemäße Düse hat noch den weiteren Vorteil, dass sie gleichzeitig als Entbartungsdüse eingesetzt werden kann. Dreht man die erfindungsgemäße Düse nämlich um 90°, so bietet sie einen breiten Flammenstrahl, der den Bart abflämmen kann, der an der Schneidfuge in der Bramme entsteht.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. im Einzelnen zeigt:
- Fig. 1: eine ausgangsseitige Stirnseitenansicht eines ersten Ausführungsbeispiels der Düse, welches nicht Teil der Erfindung ist;
- Fig. 2: eine Schnittansicht des ersten Ausführungsbeispiels der Düse entlang der Linie A - A in Fig. 1;
- Fig. 3: eine eingangsseitige Stirnseitenansicht der Düse des ersten Ausführungsbeispiels gemäß Fig. 1;
- Fig. 4: eine ausgangsseitige Stirnseitenansicht eines zweiten Ausführungsbeispiels der Düse, gemäß der Erfindung;
- Fig. 5: eine Schnittansicht des zweiten Ausführungsbeispiels der Düse entlang der Linie B - B in Fig. 4;
- Fig. 6: eine eingangsseitige Stirnseitenansicht der Düse des zweiten Ausführungsbeispiels gemäß Fig. 4; und
- Fig. 7: eine Schnittansicht des zweiten Ausführungsbeispiels der Düse entlang der Linie A - A in Fig. 6.

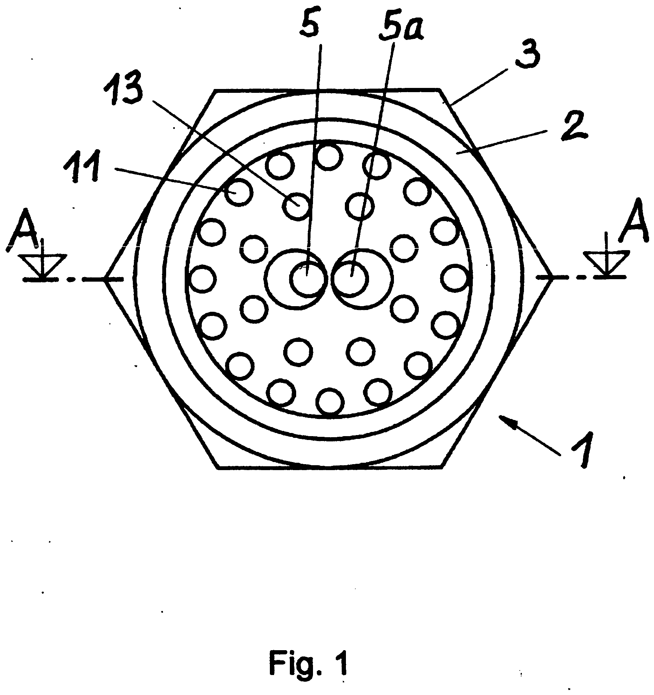

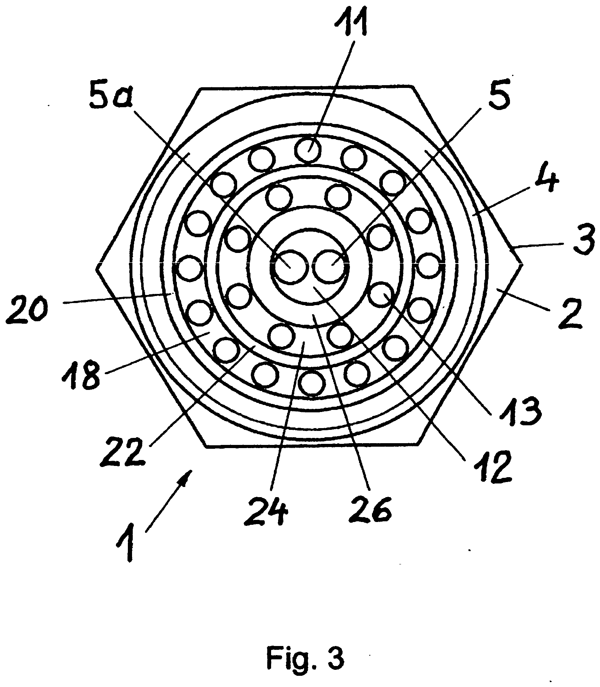

Die Düse 1 gemäß den Fig. 1 bis 3 besitzt einen Düsenkörper 2, der einstückig ausgebildet ist. Umfangsseitig ist der Düsenkörper 2 teilweise mit einem Sechskant 3 versehen, um diesen mit einem geeigneten Werkzeug an einem nicht dargestellten Schneidbrenner zu befestigen. Ein anderer Abschnitt des Außenumfangs des Düsenkörpers 2 ist mit einem Außengewinde 4 versehen, um die Düse 1 mit einem Schneidbrenner zu verschrauben.

Der Düsenkörper 2 hat einen Durchmesser von typischerweise 30 mm und eine Höhe von typischerweise 35 mm und ist einstückig aus Kupfer gebildet.

Mittig des Düsenkörpers 2 sind zwei axiale Bohrungen 5, 5a für den Schneidsauerstoff ausgebildet, die sich von der Eintrittseite 6 bis zu einem topfartigen zylindrischen Freiraum 7 an der Austrittsseite 8 des Düsenkörpers 2 erstreckt. Die Austrittsseite 8 und der topfartige zylindrische Freiraum 7 werden unmittelbar vom Sechskant 3 definiert und begrenzt. Der topfartige zylindrische Freiraum 7 hat typischerweise eine Tiefe von 10 mm und einen Durchmesser von 20 mm.

Die Eintrittsseite 6 weist eine Ausnehmung 12 auf, von der die zwei Schneidsauerstoffbohrungen 5, 5a ausgehen. Die Ausnehmung 12 hat einen Durchmesser von 6 mm und eine Tiefe von typischerweise 3-5 mm. In ihr kommt es zu einem Stoßverlust des Schneidsauerstoffs beim Eintritt in die axialen Bohrungen 5, 5a. Bei diesem Stoßverlust verringert sich der Druck, wodurch sich nach dem Satz von Bernoulli die Geschwindigkeit des Gases erhöht, was erwünscht ist, um die Effizienz beim Schneiden des Stahls zu erhöhen.

Die Durchmesser der Eintrittsöffnungen der beiden Schneidsauerstoffbohrungen 5, 5a betragen 2,7 bis 2,75 um. An die Eintrittsöffnungen schließt sich in jeder der axiaien Bohrungen 5, 5a eine im Wesentlichen parallel verlaufende Gurgel 14 an. Die Gurgel führt zu einem weiteren Druckverlust und damit zu einem weiteren Geschwindigkeitsanstieg des Schneidsauerstoffs.

Im Anschluss an die Gurgel besitzen die beiden axialen Bohrungen 5, 5a an ihrem zum topfartigen zylindrischen Freiraum 7 gerichteten Endbereich eine trichterförmige oder konische Erweiterung 9, mittels welcher der durch die axialen Bohrungen 5, 5a strömende Schneidsauerstoff beschleunigt wird. Die konischen Erweiterungen öffnen sich zur Austrittsseite mit einem Winkel von 6-8°, vorzugsweise 7°.

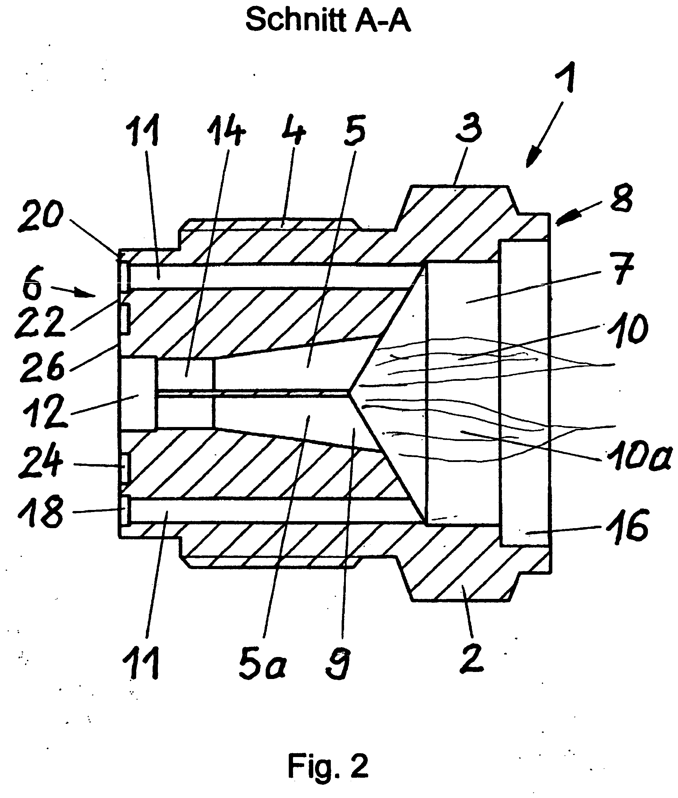

Die Durchmesser der Austrittsöffnungen der beiden Schneidsauerstoffbohrungen 5, 5a betragen 4,5 mm. Am Austrittsende der axialen Bohrungen 5, 5a bilden sich die Schneidstrahlen 10, 10a, die in Fig. 2 dargestellt sind.

Der Teil der Austrittsseite 8, der innerhalb des topfartigen zylindrischen Freiraums 7 liegt, ist kegelförmig konkav ausgebildet, wobei der Kegelwinkel 118° beträgt. Ferner ist am austrittsseitigen Ende des topfartigen zylindrischen Freiraums 7 eine Stufe 16 ausgebildet. Die Stufe 16 hat typischerweise eine Tiefe von 3-5 mm und einer Breite von 1,5-2 mm. Von dieser Stufe prallen die expandierenden Gase ab, wodurch sie stärker fokussiert werden und verhindern, dass sich Schlacke an der Wand des Topfes 7 absetzt.

Die Düse 1 umfasst eine Mehrzahl von, typischerweise sechzehn, Heizsauerstoffbohrungen 11, die in einem äußeren konzentrischen Kreis um die axialen Bohrung 5, 5a angeordnet sind und sich nicht ganz parallel zu den axialen Bohrungen 5, 5a von der Eintrittseite 6 der Düse 1 bis zum topfartigen zylindrischen Freiraum 7 des Düsenkörpers 2 erstrecken. Die Heizsauerstoffbohrungen sind in einem Ringkanal 18 angeordnet, der durch einen äußeren Dichtring 20 und einen mittleren Dichtring 22 begrenzt wird. Der Ringkanal 18 für den Heizsauerstoff hat eine Breite von typischerweise 2,5 mm und eine Tiefe bezogen auf die in einer gemeinsamen Ebene endenden Dichtringe von 0,8 mm. Die Dichtringe haben eine Breite von typischerweise 1 mm.

Des Weiteren ist eine Mehrzahl von, typischerweise acht, Heizgasbohrungen 13 vorgesehen, die in einem inneren konzentrischen Kreis um die axiale Bohrung angeordnet sind und sich ebenfalls nicht ganz parallel zu den axialen Bohrungen 5, 5a von der Eintrittseite 6 der Düse 1 bis zum topfartigen zylindrischen Freiraum 7 des Düsenkörpers 2 erstrecken. Auch die Heizgasbohrungen 13 sind in einem Ringkanal 24 angeordnet, der durch den mittleren Dichtring 22 und einen inneren Dichtring 26 begrenzt wird. Der Ringkanal 24 für das Heizgas hat ebenfalls eine Breite von typischerweise 2,5 mm und eine Tiefe bezogen auf die in einer gemeinsamen Ebene endenden Dichtringe von 0,8 mm. Die erhöhten Dichtringe bilden eine Flachdichtung und werden an eine entsprechend flach ausgestaltete Gaszuführung gepresst.

Jede der Bohrungen, nämlich die axialen Bohrungen 5, 5a, die Heizgasbohrungen 13 und die Heizsauerstoffbohrungen 11, münden in den zylindrischen Freiraum 7, in weichem die Schneidstrahlen gebildet werden.

### zweites Ausführungsbeispiel

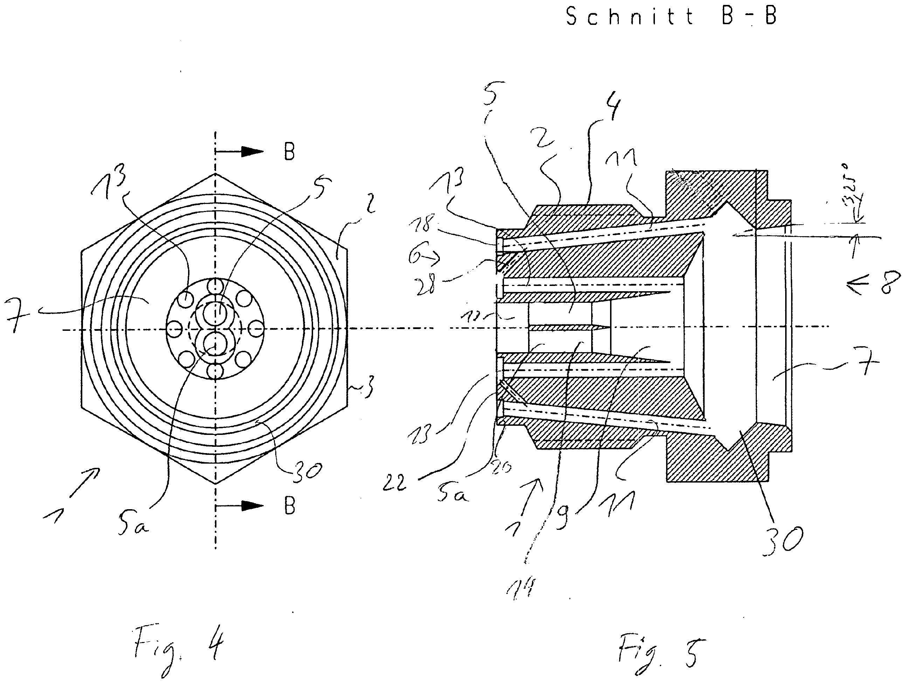

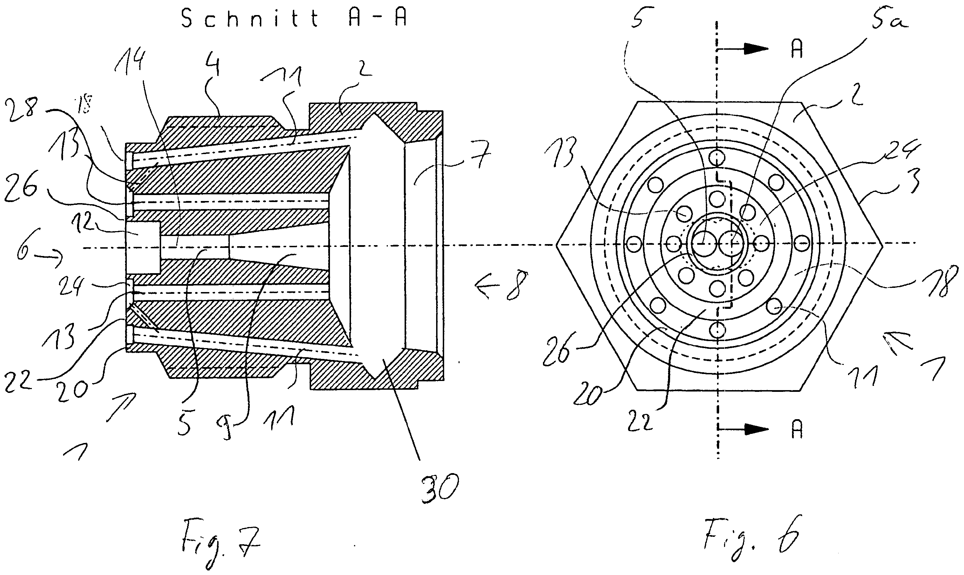

Die Fig. 4 bis 7 zeigen ein zweites erfindungsgemäßes Ausführungsbeispiel der Düse 1. Die in den beiden Ausführungsbeispielen übereinstimmenden Elemente der Düse 1 sind mit identischen Bezugsziffern gekennzeichnet und werden nicht erneut beschrieben. Beschrieben werden lediglich die Unterschiede zwischen den beiden Ausführungsbeispielen.

Fig. 5 zeigt die wesentlichen Neuerungen des zweiten Ausführungsbeispiels.

Zum einen erkennt man in Figur 5 einen Verbindungskanal 28, der zwischen der Heizsauerstoffbohrung 11 und der Heizgasbohrung 13 verläuft. Der Verbindungskanal hat einen Durchmesser von 1 mm und führt unter einem Winkel von 45° in Strömungsrichtung von der Heizgasbohrung 13 zur Heizsauerstoffbohrung 11. Durch den Verbindungskanal 28 gelangt dosiert Heizgas von der Heizgasbohrung 13 in die Heizsauerstoffbohrung 11.

Die Heizsauerstoffbohrung 11 mündet in diesem zweiten Ausführungsbeispiel in eine in der Wandung des Freiraums 7 ausgebildete, innenliegende Ringnut 30, deren austrittsseitige Wandung einen Winkel bezogen auf die Mittelachse der Düse 1 von 45° hat. Die innenliegende Ringnut 30 lenkt das Heizgemisch unter einem Winkel von typischerweise 45° nach innen in den Freiraum 7. Dies führt dazu, dass die nachfolgenden Kanten des Düsenkörpers 2 gleichmäßiger umströmt werden. Dies führt zu einer erheblichen Lärm-Reduktion.

Ferner ist in Fig. 5 zu erkennen, dass der Freiraum 7 sich zur Austrittsseite 8 hin mit einem Öffnungswinkel von 6,5 bis 7,5° öffnet. Im bevorzugten Ausführungsbeispielen der Fig. 5 beträgt der Öffnungswinkel 6,5°, entsprechend jeweils 3,25° auf allen Seiten.

### Bezugszeichen

- 1: Düse
- 2: Düsenkörper
- 3: Sechskant
- 4: Außengewinde
- 5: erste axiale Bohrung
- 5a: zweite axiale Bohrung
- 6: Eintrittsseite
- 7: Freiraum
- 8: Austrittsseite
- 9: konische Erweiterung
- 10: Schneidstrahl
- 10a: Schneidstrahl
- 11: Heizsauerstoffbohrungen
- 12: Ausnehmung
- 13: Heizgasbohrungen
- 14: Gurgel
- 16: Stufe
- 18: Ringkanal
- 20: äußerer Dichtring
- 22: mittlerer Dichtring
- 24: Ringkanal
- 26: innerer Dichtring
- 28: Verbindungskanal
- 30: innenliegende Ringnut

## Patentansprüche

1. Düse (1) zum Schneiden von Stahlwerkstücken und Werkstücken aus Eisenlegierungen mit:
a) einem Düsenkörper (2);
b) wobei der Düsenkörper (2) mindestens zwei Schneidsauerstoffbohrungen (5, 5a) aufweist, die von einer Eintrittsseite (6) des Düsenkörpers (2) hin zu einer Austrittsseite (8) des Düsenkörpers (2) zur Bildung von mindestens zwei Schneidstrahlen (10, 10a) verlaufen;
c) wobei der Düsenkörper (2) einen Freiraum (7) aufweist, der von der Austrittsseite (8) begrenzt wird und in den die Schneidsauerstoffbohrungen (5, 5a) münden;
d) einer Mehrzahl von Heizsauerstoffbohrungen (11) und Heizgasbohrungen (13), die in konzentrischen Kreisen um die zwei Schneidsauerstoffbohrungen (5, 5a) angeordnet sind;
**gekennzeichnet durch**
e) eine in der Wandung des Freiraums (7) ausgebildete, innenliegende Ringnut (30), deren austrittsseitige Wandung einen Winkel, bezogen auf die Mittelachse der Düse (1), von 45° hat, und in die die Heizsauerstoffbohrungen (11) münden.

2. Düse nach dem vorhergehenden Anspruch,
**dadurch gekennzeichnet,**
**dass** die zwei Schneidsauerstoffbohrungen (5, 5a) trichterförmig ausgebildet sind und sich zur Austrittsseite mit einem Winkel von 6-8°, vorzugsweise 7°, öffnen.

3. Düse nach einem der vorhergehenden Ansprüche,
**dadurch gekennzeichnet,**
**dass** die Eintrittsseite (6) eine Ausnehmung (12) aufweist, von der die zwei Schneidsauerstoffbohrungen (5, 5a) ausgehen.

4. Düse nach dem vorhergehenden Anspruch,
**dadurch gekennzeichnet,**
**dass** die Ausnehmung (12) einen Durchmesser von mindestens 6 mm aufweist.

5. Düse nach einem der vorhergehenden Ansprüche,
**dadurch gekennzeichnet,**
**dass** die Durchmesser der Eintrittsöffnungen der zwei Schneidsauerstoffbohrungen (5, 5a) 2,75 mm betragen.

6. Düse nach einem der vorhergehenden Ansprüche,
**dadurch gekennzeichnet,**
**dass** die Durchmesser der Austrittsöffnungen der zwei Schneidsauerstoffbohrungen (5, 5a) 4,5 mm betragen.

7. Düse nach einem der vorhergehenden Ansprüche,
**dadurch gekennzeichnet,**
**dass** der Freiraum (7) topfartig konkav ausgebildet ist.

8. Düse nach dem vorhergehenden Anspruch,
**dadurch gekennzeichnet,**
**dass** der Düsenkörper (2) außen-umfangsseitig teilweise von einer Haltemutter (3) zum Verschrauben der Düse an einem Schneidbrenner umgeben ist; und
**dass** der topfartige Freiraum (7) und die Haltemutter (3) einstückig ausgebildet sind.

9. Düse nach einem der beiden vorhergehenden Ansprüche,
**dadurch gekennzeichnet,**
**dass** der Boden des topfartigen Freiraums (7) kegelförmig konkav ausgebildet ist.

10. Düse nach dem vorhergehenden Anspruch,
**dadurch gekennzeichnet,**
**dass** der Kegelwinkel 116° bis 118° beträgt.

11. Düse nach einem der vorhergehenden Ansprüche,
**dadurch gekennzeichnet,**
**dass** zwischen der Heizsauerstoffbohrung (11) und der Heizgasbohrung (13) ein Verbindungskanal (28) ausgebildet ist;
wobei der Verbindungskanal einen Durchmesser von 0,8 bis1,2 mm hat, vorzugsweise 1 mm, und unter einem Winkel von 45° bezogen auf die Mittelachse der Düse (1) derart von der Heizgasbohrung (13) zur Heizsauerstoffbohrung (11) führt, dass dosiert Heizgas von der Heizgasbohrung (13) in die Heizsauerstoffbohrung (11) gelangt.

12. Düse nach einem der vorhergehenden Ansprüche,
**dadurch gekennzeichnet,**
**dass** der Freiraum (7) sich zur Austrittsseite (8) hin mit einem Öffnungswinkel von 6,5 bis 7,5° öffnet.

## Claims

1. Nozzle (1) for cutting steel workpieces and workpieces made of ferrous alloys with:
a) a nozzle body (2);
b) wherein the nozzle body (2) has at least two cutting oxygen bores (5, 5a), which extend from an inlet side (6) of the nozzle body (2) towards an outlet side (8) of the nozzle body (2) to form at least two cutting jets (10, 10a);
c) wherein the nozzle body (2) has a free space (7), which is bounded by the outlet side (8) and into which the cutting oxygen bores (5, 5a) open; and with
d) a plurality of heating oxygen bores (11) and heating gas bores (13), which are arranged in concentric circles around the two cutting oxygen bores (5, 5a); **characterised by**
e) an inner annular groove (30) formed in the wall of the free space (7), whose outlet-side wall is at an angle of 45° with respect to the centre axis of the nozzle (1), and into which the heating oxygen bores (11) open.

2. Nozzle according to the preceding claim,
**characterised in that**
the two cutting oxygen bores (5, 5a) are funnel-shaped and open at an angle of 6 to 8°, preferably 7°, at the outlet side.

3. Nozzle according to one of the preceding claims,
**characterised in that**
the inlet side (6) has a recess (12) from which the two cutting oxygen bores (5, 5a) extend.

4. Nozzle according to the preceding claim,
**characterised in that**
the recess (12) has a diameter of at least 6 mm.

5. Nozzle according to one of the preceding claims,
**characterised in that**
the diameter of the inlet openings of the two cutting oxygen bores (5, 5a) is 2.75 mm.

6. Nozzle according to one of the preceding claims,
**characterised in that**
the diameter of the outlet openings of the two cutting oxygen bores (5, 5a) is 4.5 mm.

7. Nozzle according to one of the preceding claims,
**characterised in that**
the free space (7) is concavely cup-shaped.

8. Nozzle according to the preceding claim,
**characterised in that**
the nozzle body (2) is partially surrounded peripherally by a hexagonal nut (3) for screwing the nozzle onto a cutting torch; and
the cup-shaped free space (7) and the hexagonal nut (3) are integrally formed.

9. Nozzle according to one of the two preceding claims,
**characterised in that**
the bottom of the cup-shaped free space (7) is concavely conical.

10. Nozzle according to the preceding claim,
**characterised in that**
the cone angle is 116° to 118°.

11. Nozzle according to one of the preceding claims,
**characterised in that**
a connecting channel (28) is formed between the heating oxygen bore (11) and the heating gas bore (13);
wherein the connecting channel has a diameter of 0.8 to 1.2 mm, preferably 1 mm, and is at an angle of 45° to the centre axis of the nozzle (1), extending in such a way from the heating gas bore (13) to the heating oxygen bore (11) that heating gas passes from the heating gas bore (13) to the heating oxygen bore (11) in a metered fashion.

12. Nozzle according to one of the preceding claims,
**characterised in that**
the free space (7) opens towards the outlet side (8) with an opening angle of 6.5 to 7.5°.

## Revendications

1. Buse (1) pour la découpe de pièces en acier et de pièces en alliages ferreux, avec :
a) un corps de buse (2) ;
b) le corps de buse (2) comprenant au moins deux perçages à oxygène de coupe (5, 5a) qui s'étendent d'un côté d'entrée (6) du corps de buse (2) jusqu'à un côté de sortie (8) du corps de buse (2) afin de former au moins deux jets de coupe (10, 10a) ;
c) le corps de buse (2) comprenant un espace libre (7) qui est limité par le côté de sortie (8) et dans lequel débouchent les perçages à oxygène de coupe (5, 5a) ;
d) une pluralité de perçages à oxygène de chauffage (11) et de perçages à gaz de chauffage (13) qui sont disposés en cercles concentriques autour des deux perçages à oxygène de coupe (5, 5a) ;
**caractérisée par**
e) une rainure annulaire interne (30), réalisée dans la paroi de l'espace libre (7), dont la paroi du côté de la sortie forme un angle de 45° par rapport à l'axe de la buse (1) et dans laquelle débouchent les perçages à oxygène de chauffage (11).

2. Buse selon la revendication précédente,
**caractérisée en ce que**
les deux perçages à oxygène de coupe (5, 5a) présentent une forme d'entonnoir et s'ouvrent vers le côté de sortie avec un angle de 6 à 8°, de préférence de 7°.

3. Buse selon l'une des revendications précédentes,
**caractérisée en ce que**
le côté d'entrée (6) comprend un évidement (12), duquel sortent les deux perçages à oxygène de coupe (5, 5a).

4. Buse selon la revendication précédente,
**caractérisée en ce que**
l'évidement (12) présente un diamètre d'au moins 6 mm.

5. Buse selon l'une des revendications précédentes,
**caractérisée en ce que**
les diamètres des ouvertures d'entrée des deux perçages à oxygène de coupe (5, 5a) sont de 2,75 mm.

6. Buse selon l'une des revendications précédentes,
**caractérisée en ce que**
les diamètres des ouvertures de sortie des deux perçages à oxygène de coupe (5, 5a) sont de 4,5 mm.

7. Buse selon l'une des revendications précédentes,
**caractérisée en ce que**
l'espace libre (7) présente une forme de cloche concave.

8. Buse selon la revendication précédente,
**caractérisée en ce que**
le corps de buse (2) est entourée, au niveau de sa périphérie externe, par un écrou de maintien (3) pour le vissage de la buse sur un chalumeau de coupe ; et
l'espace libre (7) en forme de cloche et l'écrou de maintien (3) sont réalisés d'une seule pièce.

9. Buse selon l'une des deux revendications précédentes,
**caractérisée en ce que**
le fond de l'espace libre (7) en forme de cloche présente une forme conique concave.

10. Buse selon la revendication précédente,
**caractérisée en ce que**
l'angle du cône est de 116° à 118°.

11. Buse selon l'une des revendications précédentes,
**caractérisée en ce que**
entre le perçage à oxygène de chauffage (11) et le perçage à gaz de chauffage (13), se trouve un canal de liaison (28) ;
le canal de liaison présentant un diamètre de 0,8 à 1,2 mm, de préférence de 1 mm et conduisant, en formant un angle de 45° par rapport à l'axe de la buse (1), du perçage à gaz de chauffage (13) au perçage à oxygène de chauffage (11), de façon à ce qu'un gaz de chauffage passe de manière dosée du perçage à gaz de chauffage (13) vers le perçage à oxygène de chauffage (11).

12. Buse selon l'une des revendications précédentes,
**caractérisée en ce que**
l'espace libre (7) s'ouvre en direction du côté de sortie (8) avec un angle d'ouverture de 6,5 à 7,5°.
